(19) Europäisches Patentamt
European Patent Office
Office européen des brevets

(11) Publication number: **0 315 151 A2**

# (12) EUROPEAN PATENT APPLICATION

(21) Application number: **88118261.2**

(22) Date of filing: **02.11.88**

(51) Int. Cl.[4]: **C08F 8/30 , C08F 8/32**

(30) Priority: **04.11.87 IT 2250487**

(43) Date of publication of application:
**10.05.89 Bulletin 89/19**

(84) Designated Contracting States:
**AT BE CH DE ES FR GB GR IT LI NL SE**

(71) Applicant: **VEDRIL S.p.A.**
**31, Foro Buonaparte**
**Milan(IT)**

(72) Inventor: **Canova, Luciano, Dr.**
**7, via Marsala**
**I-28100 Novara(IT)**
Inventor: **Giannini, Umberto, Dr.**
**53, via Sismondi**
**I-20100 Milano(IT)**
Inventor: **Albizzati, Enrico, Dr.**
**64, via Roma**
**I-28041 Arona (NO)(IT)**
Inventor: **Binaghi, Marco, Dr.**
**43, via Sismondi**
**I-20100 Milano(IT)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-8000 München 40(DE)**

## (54) Process for the preparation of imidized acrylic polymers.

(57) Process for the preparation of imidized acrylic polymers which comprises polymerizing acrylic monomers in the presence of at least one modifier chosen among those having the formulae:

$$R_1 - NH_2 \qquad (I)$$

$$R_2 - X - NH - R_3 \qquad (II)$$

$$R_4 - COONH_3R_5 \qquad (III)$$

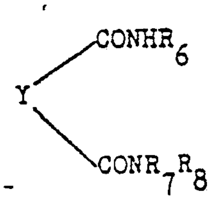
(IV)

and heating the thus-obtained polymer at a completing temperature higher than its melting temperature.

EP 0 315 151 A2

## PROCESS FOR THE PREPARATION OF IMIDIZED ACRYLIC POLYMERS

The present invention relates to a process for the preparation of imidized acrylic polymers.

By the term "acrylic polymers" as used in the present description and claims, homopolymers and copolymers and mixtures thereof of acrylic monomers are intended, such as the alkyl esters of methacrylic or acrylic acid wherein the alkyl group contains from 1 to 8, preferably 1 to 4, carbon atoms.

Examples of such esters of the methacrylic or acrylic acid are: methyl methacrylate, ethyl methacrylate, isopropyl methacrylate, sec.-butyl methacrylate, tert.-butyl methacrylate, methyl acrylate, ethyl acrylate, butyl acrylate, isopropyl acrylate, etc.

The acrylic polymers or acrylic resins may contain units derived from other monomers containing double bonds such as styrene, α-methylstyrene, acrylonitrile, acrylamide, etc. or from monomers having double unsaturation such as, for instance, butadiene, Such monomer units are usually present in amounts of less than 50, preferably less than 20 mol percent, based on the total amount of (meth)acrylic and other monomer units.

Furthermore, these acrylic polymers have an inherent viscosity, measured in N,N′-dimethylformamide at 30° C, between 0.01 and 7, and preferably between 0.2 and 2.

The main drawback shown by these acrylic polymers is that they have a glass transition temperature (Tg) rather low such as to limit significantly their use.

It is known from U. S. Patent No. 3,284,425 or from UK Patent No. 926,629, to increase the Tg of these polymers by imidation carried out by reaction with ammonium hydroxide, ammonium phosphate or alkyl amines, or by partial reaction of the acrylic resin itself with ammonium hydroxide followed by reaction with an alkylamine.

These processes show many drawbacks: they are performed in an autoclave, they are of the discontinuous type, they require heating and reaction times generally very long, and they involve the use of dissolving or suspending agents.

In order to overcome these drawbacks, in German Patent No. 1.077,872 a process has been proposed for the preparation of acrylic polymers imidized in an extruder, using ammonia in aqueous phase. The product obtained, however, has a poor thermal stability and requires further treatments before being used in the transformation processing.

In U.S. Patent Nó. 4,246,374 a process is described for the preparation of imidized acrylic polymers in an extruder by direct reaction of the acrylic resin with ammonia or with a primary amine, under substantially anhydrous conditions. The product obtained has a good thermal stability, but the process conditions for its preparation are particularly burdensome, in that it is necessary to work at temperatures up to 450° C and under pressures up to 1,000 atm.

It has now been discovered (in accordance with the present invention) that the above-mentioned drawbacks may be overcome by preparing acrylic polymers imidized directly in the polymerization step.

Therefore, an object of the present invention is a process for the preparation of imidized acrylic polymers which comprises polymerizing the acrylic monomers in the presence of at least one modifier chosen among those having the formulae:

$$R_1 - NH_2 \qquad (I)$$

$$R_2 - X - NH - R_3 \qquad (II)$$

$$R_4 - COONH_3R_5 \qquad (III)$$

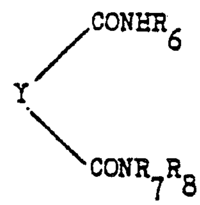

(IV)

wherein $R_1$ is an alkyl, cycloalkyl, aryl, alkylaryl, or arylalkyl radical containing from 1 to 20 carbon atoms, or the residue of an amino acid containing 1 to 20 oarbon atoms, $R_2$, $R_3$, $R_4$, $R_5$, $R_6$, $R_7$ and $R_8$, the same or different, are hydrogen or an alkyl, cycloalkyl, aryl, alkylaryl, arylalkyl radical containing from 1 to 20 carbon atoms optionally substituted by heteratoms, X is a bifunctional radical chosen from among -CO-,CONH-, -NHCO-, -OCO-, $-SO_2-$, $-C_6H_4SO_2-$, and Y is a direct bond or is chosen from among straight or branched alkylene radicals containing from 1 to 12 carbon atoms, cycloalkylene radicals containing from 5 to 12 carbon atoms, or arylene radicals containing from 6 to 12 carbon atoms or among the corresponding heterosubsituted radicals containing heteratoms as substituents of at least one hydrogen and/or inserted between at least two adjacent carbon atoms, and to heat the thus-obtained polymer at a completing temperature higher than its melting temperature.

Examples of heteratoms are nitrogen, oxygen,

sulphur, halogen, etc.

Preferred groups $R_1$, $R_2$, $R_3$, $R_4$, $R_5$, $R_6$, $R_7$ and $R_8$ are (beside hydrogen):
alkyl groups having 1 to 8, particularly 1 to 4 carbon atoms, such as e.g. methyl, ethyl, n-propyl, i-propyl, n-butyl, i-butyl and sec.-butyl;
cycloalkyl groups having 3 to 8 carbon atoms, such as e.g. cyclopentyl and cyclohexyl; aryl groups having 6 to 14 carbon atoms, such as e.g. phenyl, naphthyl and biphenylyl;
alkylaryl groups having 7 to 15 carbon atoms, such as e.g. tolyl, xylyl,trimethylphenyl, ethylphenyl, propylphenyl, and methylnaphthyl;
arylalkyl groups having 7 to 15 carbon atoms, such as e.g. benzyl, phenethyl and naphthylmethyl.

Heteroatom containing groups $R_1$ to $R_8$ are e.g. the above mentioned groups substituted with 1 to 3 substituents selected from halogen atoms (e.g. F, Cl, Br and J) (e.g. chloromethyl, dichloromethyl trichloromethyl, chloroethyl, fluoromethyl, trifluoromethyl, chlorophenyl), hydroxy groups and alkoxy groups having 1 to 4 carbon atoms (e.g. hydroxymethyl, hydroxyethyl, hydroxyphenyl, anisyl), $NH_2$ groups and mono- and dialkylamino groups, wherein the alkyl groups have 1 to 4 carbon atoms.

Cyclic, hetero atom containing groups, such as e.g. pyridyl, furanyl, imidazolyl, pyrrolyl, thiophenyl, piperidinyl, tetrahydrofuryl and correspondingly substituted derivatives thereof may also serve as groups $R_1$ to $R_8$.

Preferred groups Y include the following:
straight or branched alkylene radicals having 1 to 6 carbon atoms, such as e.g. methylene, ethylene, propylene, butylene, pentylene and hexylene;
cycloalkylene radicals containing 5 to 8 carbon atoms, such as e.g. cyclopentylene and cyclohexylene;
arylene radicals containing 6 to 10 carbon atoms, such as e.g. phenylene and naphthylene.

In said radicals e.g. up to 3 carbon atoms different from those directly attached to the amide functionality may be replaced by groups such as e.g. -0-, -NH-, $-N(CH_3)-$ and -S-.

Alternatively or additionally said groups may have up to 3 hetero-atom containing substituents, e.g. one or more of 0H, 0R, ($R = C_{1-4}$ alkyl), and halogen (e.g. F, Cl, Br and J).

Examples of modifiers of the formula (I) are:
ethylamine, propylamine, n-butylamine, hexylamine, heptylamine, octylamine, nonylamine, decylamine, dodecylamine, hexadecylamine, octadecylamine, phenethylamine, alanine, glycine, etc.

Examples of modifiers of the formula (II) are:
acetamide, anisamide, benzamide, acetanilide, butyramide, benzanilide, propionamide, formamide, N-methylacetamide, N-methylbenzamide, N-methylformamide, benzenesulfonamide, N,N′-dimethylurea, 2-chloroacetamide, 4-chloroacetanilide, 2-chlorobenzamide, 4-chlorobenzamide, 4-chlorobenzenesulfonamide, 3-chloropropionamide, 2-chloronicotinamide, 4-chloronicotinamide, fluoroacetamide, 6-chloronicotinamide, etc.

Examples of modifiers of the formula (III) are:
ammonium formate, ammonium acetate, ammonium benzoate, ammonium p-anisate, ammonium propionate, ammonium butyrate, N-methylammonium formate, N-cyclohexylammonium acetate, N-phenylammonium formate, ammonium chloroacetate, ammonium p-chlorobenzoate, etc.

Examples of modifiers of the formula (IV) are:
oxamide, malonamide, succinamide, adipamide, N-methyloxamide, N,N′-dimethyloxamide, N,N′-dimethylsuccinamide, N,N′-dimethylmalonamide, diamides of the phthalic acids, N,N′-dicyclohexylsuccinamide, etc.

The imidized acrylic polymers obtained by the process of the present invention have a very good thermal stability, inherent viscosity, in N,N-dimethylformamide (DMF) at 30°C in 0.25% by weight solution, of between 0.01 and 7, and preferably between 0.2 and 2, and a nitrogen content of between 0.1 and 9% by weight, and preferably between 0.5 and 7%.

In particular, the process of the present invention involves the polymerization of acrylic monomers in bulk or in solvent, in the presence of promoters of the free radical type and, optionally, of molecular weight regulators and at least one of the modifiers of the formulae from (I) ro (IV), at a temperature between 60° and 200°C and at pressures such to avoid the boiling of the monomers, such as for instance pressures between 2 and 10 atm.

The free radical promoters and the regulators of the molecular weight are those commonly used in processes for the polymerization of acrylic monomers, whereas the solvents may be of the aromatic type such as benzene, toluene, ethylbenzene, or of cycloaliphatic type such as cyclohexane.

The completing reaction takes place at temperatures lower than 350°C, and preferably between the melting temperature of the acrylic polymer and 260°C, whereas the pressure is kept between 0.1 and 3 atm, and is preferably atmospheric pressure.

The modifier is used in amounts between 5 and 60% by mols, based onthe monomeric (meth)-acrylic unit,and preferably between 10 and 50%.

According to a preferred embodiment of the process of the present invention, basic, acid and/or transesterification catalysts may be added for the completing reaction. These catalysts are products

having a high boiling point which are stable under the reaction conditions. They are preferably selected from the group comprising tertiary amines, such as tricyclohexylamine, 1,1,3,3-tetramethylguanidine, 1-3-diphenylguanidine, quinoline, isoquinoline, 4-benzylpyridine; or $Sb_2O_3$, $Ti(OC_4H_9)_4$, $NaNH_2$, $SnO_2$, sodium and potassium alcoholates, manganese acetate, etc.

The catalysts may be used in amounts up to 30% by weight calculated on the total weight of the reaction mixture.

The imidized acrylic copolymers obtained by the process of the present invention may be processed by conventional techniques for the transformation of thermoplastic polymers, such as for instance extrusion, injection molding, etc., and may be used for producing manufactured articles of any shape and/or size while optionally mixed with other thermoplastic resins.

Furthermore, these polymers may be used for the preparation of plates, films, pipes, filaments, etc.

The imidized polymers obtained by the process of the present invention may be mixed with suitable additives, such as for instance anti-shock products, pigments, fibers, mineral fillers, flame retarders, lubricants, plasticizers, etc.

Moreover, these polymers may be additioned with foaming agents and used in foamed form, optionally mixed further with fibers and/or inorganic fillers, to produce articles having a low density and high mechanical properties.

In order still better to understand the present invention and to perform practically the same, here follow some illustrative but not limitative examples.

## Example 1

Into a glass reactor provided with stirrer and outlet for the volatile components, 24.5 g of methyl methacrylate, 0.75 g of methyl acrylate, 0.25 g of AiBN (azobisdiisobutyronitrile), 13.8 ml of cyclohexylamine, and 20 ml of benzene are introduced under nitrogen. The whole is heated to 60 °C and the polymerization is carried out for 4 hours. Thereafter the mixture is gradually heated up to 250 °C, while distilling and removing the volatile compounds. The whole is kept at 250 °C for 3 hours and then vacuum is applied by a mechanical pump for 15 minutes. Thereafter the whole is cooled at 70 °-80 °C and refluxed with nitrogen. The reaction product is diluted with 50 ml of tetrahydrofurane (THF) to give a solution from which the polymer is recovered by coagulation with methanol.

The thus-obtained product is filtered off, washed with ether and dried under vacuum.

The polymer has an inherent viscosity in DMF equal to 0.25, the nitrogen content is 1.16% by weight, and the glass transition temperature (Tg) is 126 °C.

The glass transition temperature is determined using a differential calorimeter and is the temperature corresponding to the inflection which appears in the thermogram when the thermal capacity of the material changes. The scanning rate of the temperature is 20 °C/minute and the measurement is carried out after a first heating up to 200 °C and subsequent cooling.

## Example 2

Into the reactor described in Example 1, 24.5 g of methyl methacrylate, 0.75 g of methyl acrylate, 0.25 g of AiBN, 15 g of benzamide, and 20 ml of benzene are introduced at the same time, under nitrogen. The whole is heated up to 60 °C and the polymerization is carried out for 4 hours. Thereafter the whole is gradually heated up to 250 °C, while distilling off and removing the volatile compounds.

The reaction is continued at 250 °C for 3 hours, then the vacuum is produced by a mechanical pump for 15 minutes. After cooling to 70 °C and refluxing with nitrogen, the reaction product is diluted with 50 ml of THF to obtain a solution from which the polymer is recovered by coagulation with methanol.

The product thus obtained is filtered off, washed with ether, and dried under vacuum.

The polymer has an inherent viscosity in DMF equal to 0.35; the nitrogen content is 2.5% by weight; the glass transition temperature (Tg) is 140 °C.

## Example 3

The operation is carried out according to Example 1, using 36.5 g of methyl methacrylate, 1.125 g of methyl acrylate, 0.375 g of AiBN, and 22.5 g of benzamide.

The polymer thus obtained has an inherent viscosity equal to 0.36, the nitrogen content is 3% by weight, and the Tg is 140 °C.

## Example 4

The operation is carried out according to Example 1, using 24.5 g of methyl methacrylate, 0.75 g of methyl acrylate, 0.25 g of AiBN, and 34.8 g of

ammonium benzoate, under nitrogen. The whole is heated up to 60 °C and the polymerization is carried out for 4 hours. Subsequently the whole is gradually heated up to 255 °C, while distilling off and removing the volatile compounds. The reaction at 255 °C is continued for 3 hours, then by means of a mechanical pump vacuum is applied for 15 minutes; the whole is cooled to 70 °C and refluxed with nitrogen; and then the reaction product is diluted with 50 ml of THF to obtain a solution from which the polymer is recovered by coagulation with methanol.

The product thus obtained is filtered off, washed with ether, and dried under vacuum.

The inherent viscosity of the polymer in DMF is 0.54, the nitrogen content is 0.9% by weight, and the glass transition temperature (Tg) is 128 °C.

Example 5

The operation is carried out according to Example 1 using 24.5 g of methyl methacrylate, 0.75 g of methyl acrylate, 0.25 g of AiBN, and 11 g of oxamide.

The thus-obtained polymer has an inherent viscosity equal to 0.32 and a Tg = 126 °C.

Example 6

Into a tubular reactor provided with stirrer and heated by means of a heat exchanger with oil circulation, a mixture consisting of methyl methacrylate (48% by weight), methyl acrylate (4%), toluene (l3%), t.-butyl-peroxide (0.003%), dodecylmercaptan (0.13%), benzamide (31%) and 1,1,3,3-tetramethylguanidine (3.86%) is continuously introduced by a dosing pump with a flow such to attain an average residence time in the reactor equal to 2 hours.

The inner temperature of the reactor is adjusted from 60 °C in the feeding zone to 130 °C in the end zone and the pressure is adjusted in such a manner as to prevent the boiling of the monomer (4-5 atm).

The reacted mixture (degree of conversion of the monomer of about 40%) is sent to two thin layer devolatilizers, joined in series, keeping the first at 220 °C and 2 atm. and the second at 250 °C and 200 torr.

The residence time in the devolatizers is about 60 minutes. The polymer is discharged by means of a suction pump and is sent to an extruder provided with a granulating device.

After dissolution in DMF and successive precipitation with methyl alcohol, washing with ether and drying, the polymer shows an inherent viscosity of 0.6 and a Tg = 138 °C.

## Claims

1. Process for the preparation of imidized acrylic polymers comprising polymerizing acrylic monomers in the presence of at least one modifier selected from those having the formulae:

$R_1-NH_2$ (I)

$R_2-X-NH-R_3$ (II)

$R_4-COONH_3R_5$ (III)

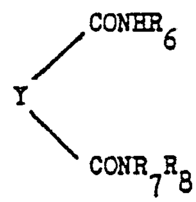
(IV)

wherein $R_1$ is an alkyl, cycloalkyl, aryl, alkylaryl or aryl alkyl radical having from 1 to 20 carbon atoms, or the residue of an amino acid having 1 to 20 carbon atoms, $R_2$, $R_3$, $R_4$, $R_5$, $R_6$, $R_7$, $R_8$, the same or different, are hydrogen or an alkyl, cycloalkyl, aryl, arylalkyl, alkylaryl radical containing from 1 to 20 carbon atoms, optionally substituted with heteroatoms, X is a bifunctional radical selected from -CO-, -CONH-, -NHCO-, -OCO-, $-SO_2-$,$-C_6H_4SO_2-$, and Y is a direct bond or is selected from straight or branched alkylene radicals containing from 1 to 12 carbon atoms, cycloalkylene radicals containing from 5 to 12 carbon atoms or arylene radicals containing from 6 to 12 carbon atoms or from the corresponding heterosubstituted radicals containing heteroatoms as substituents of at least one hydrogen and/or inserted between two adjacent carbon atoms, and to heating the thus-obtained polymer to a completing temperature higher than its melting temperature.

2. Process according to claim 1, wherein the heteroaroms are nitrogen, oxygen, sulphur, and halogen.

3. Process according to claim 1 or 2, wherein the modifiers of formula (I) are selected from ethylamine, propylamine, n-butylamine, hexylamine, heptylamine, octylamine, nonylamine, decylamine, dodecylamine, hexadecylamine, octadecylamine, phenethylamine, alanine, and glycine; the

modifiers of formula (II) are selected from acetamide, anisamide, benzamide, acetanilide, butyramide, benzanilide, propionamide, formamide, N-methylacetamide, N-methylbenzamide; N-methylformamide, benzenesulfonamide, N,N′-dimethylurea, 2-chloroacetamide, 4′-chloroacetanilide, 2-chlorobenzamide, 4-chlorobenzamide, 4-chlorobenzenesulfonamide, 3-chloropropionamide, 2-chloronicotinamide, 4-chloronicotinamide, fluoroacetamide, and 6-chloronicotinamide; the
modifiers of the formula (III) are selected from ammonium formate, ammonium acetate, ammonium benzoate, ammonium p-anisate, ammonium propionate, ammonium butyrate, N-methylammonium formate, N-cyclohexylammonium acetate, N-phenylammonium formate, ammonium chloroacetate, and ammonium p-chlorobenzoate; and the
modifiers of the formula (IV) are selected from oxamide, malonamide, succinamide, adipamide, N-methyloxamide, N,N′-dimethyloxamide, N,N′-dimethylsuccinamide, N,N′-dimethy]maloxamide, diamide of a phthalic acid, and N,N′-dicyclohexylsuccinamide.

4. Process according to any one of claims 1 to 3, wherein the completing reaction takes place at temperatures lower than 350 °C, and preferably between the melting temperature of the acrylic polymer and 260 °C.

5. Process according to any one of claims 1 to 4, wherein the completing pressure varies from 0.1 to 3 atm., and preferably is equal to atmospheric pressure.

6. Process according to any one of claims 1 to 5, wherein the modifier is used in amounts between 5 and 60% by mols based on the acrylic monomeric unit, and preferably between
10 and 50%.

7. Process according to any one of claims 1 to 6, wherein the completing reaction takes place in the presence of basic, acid and/or transesterification catalysts.

8. Process according to claim 7, wherein the catalysts are selected from the tertiary amines tricyclohexylamine, 1,1,3,3-tetramethylguanidine, 1,3-diphenylguanidine, quinoline, isoquinoline, 4-benzylpyridine, 4-phenylpyridine, and $Sb_2O_3$, $Ti(OC_4H_9)_4$, $NaNH_2$, $SnO_2$, sodium and potassium alcoholates, and manganese acetate.

9. Imidized acrylic polymers obtainable by the process of any one of claims 1 to 8.

10. Imidized acrylic polymers according to claim 9, having an inherent viscosity, in N,N′-dimethylformamide at 30 °C in 0.25% by weight solution, of between 0.01 and 7, and preferably between 0.2 and 2, and a nitrogen content of between 0.1 and 9% by weight, and preferably between 0.5 and 7%.